# EUROPEAN PATENT SPECIFICATION

(11) **EP 4 384 053 B1**
(45) Date of publication and mention of the grant of the patent: **16.10.2024**
(21) Application number: 22813585.1
(22) Date of filing: 08.11.2022
(51) Int. Cl.: A47J 43/046

(54) **A KITCHEN APPLIANCE**
KÜCHENGERÄT
APPAREIL DE CUISINE

(30) Priority: 10.11.2021 EP 21207537
(43) Date of publication of application: 19.06.2024
(73) Proprietor: Versuni Holding B.V., 5656 AE Eindhoven (NL)
(72) Inventor: HIETBRINK, Ingrid, 5656 AE Eindhoven (NL)
(74) Representative: Vollering, Stefanus Franciscus Maria
(86) International application number: PCT/EP2022/081139
(87) International publication number: WO 2023/083814

(56) References cited:
- EP-A1- 3 685 718
- WO-A1-03/019583
- WO-A1-2016/202816
- CN-U- 203 424 837

## Description

### FIELD OF THE INVENTION

This invention relates to kitchen appliances, and in particular kitchen appliances with a tool located in a food container, and the food container being removably attachable to a base.

### BACKGROUND OF THE INVENTION

Kitchen appliances are for example for food preparation or for food cooking. One example of food preparation kitchen appliance is a blender, with a separable base and container (which includes or is attached to a tool holder). This type of configuration is for example common for smoothie makers as well as blenders in general. Other kitchen appliances with a separable base and container may be arranged for chopping, kneading, centrifuging or ventilating.

One example of a food cooking kitchen appliance is an air fryer. An air fryer incorporates a fan for circulating heated air around a food container, which food container then comprises a cooking chamber. A tool in the form of a fan is then arranged in the food container for circulating the heated air. Thus, the tool in this case may be a fan or other airflow generator such as pump.

The term "tool" in this application is thus intended to cover a tool for processing food or fan or pump for controlling air flow, and the term "container" is intended to cover a container for food for processing and/or a container functioning as a cooking chamber.

To be able to handle and clean the food container, without the base of the device, the food container is removable from the base. The most common way of coupling the tool of the removable food container to the base of the device is by means of a mechanical coupling. This coupling for example has a drive part which projects from the base, which is driven by a motor in the base, and a receiving part in the bottom of the food container. The food container is for example attached to the base by a bayonet coupling.

Another means of coupling between the base and the tool holder is a magnetic drive coupling. In such a coupling, for example, the motor in the base may drive a ring of magnets, and a tool holder of the container has a corresponding ring of magnets which rotate by magnetic coupling between the two rings. The rings of magnets have the same even number of, evenly distributed, permanent magnets, forming pairs in both rings, with the polarities preferably alternating around the ring, and with magnets of opposite polarity facing each other between the rings. A coupling with the magnet poles mounted alternately around a ring is stronger than a coupling with the magnets mounted all in the same direction, because this prevents the driving part and the driven part from rotating relatively to each other. The magnetic parts do not touch, and a layer of non-magnetic material may be provided between the base and the container. The document WO 2016/202816 A1 discloses an appliance with a magnetic coupling.

One advantage of a magnetic coupling is that the contact surfaces between the two parts can be substantially flat (with no rotary mechanical interlocking features as for example in a mechanical coupling) and this allows an aesthetically pleasing and easy-to-clean design. It also simplifies the mounting of the container to the base; it may simply be slid into place. It also has reduced sound level can cannot become overloaded. A magnetic coupling of this type is becoming increasingly popular.

In order to increase the strength of the magnetic coupling, and thereby enable a higher transfer of torque between the motor and the tool holder in the container, stronger magnets are desired. However, the use of stronger magnets makes it more difficult to remove the container from the base. Thus, it can become difficult for the user to remove the container for cleaning.

There is therefore a need for a design which allows the container to be removed more easily from the base while still enabling a strong magnetic coupling for transferring torque.

### SUMMARY OF THE INVENTION

The invention is defined by the claims.

According to examples in accordance with an aspect of the invention, there is provided a kitchen appliance comprising:
a base housing a motor, the base having an upper surface and a first portion of a magnetic drive coupling beneath the upper surface, wherein the first portion comprises a first magnet arrangement;
a container, wherein a bottom side of the container is for mounting on the base, wherein the container houses:
   a tool; and
   a second portion of the magnetic drive coupling for magnetically coupling with the first portion of the magnetic drive coupling, such that the tool is driven by the motor of the base via the magnetic drive coupling, wherein the second portion comprises a second magnet arrangement; and
a decoupling arrangement for rotating the first and second portions relative to each other such that a magnetic coupling force between the first and second portions of the magnetic drive coupling is reduced.

This appliance is designed such that relative rotation between the two portions of the magnetic drive coupling is used to provide a release or partial release of the coupling force between the two coupling portions, so that the container may be more easily removed from the base.

At least one of the first and second portions is preferably rotatable by an amount to reduce the magnetic coupling force between the first and second portions of the magnetic drive coupling.

This reduced coupling force is obtained by reducing the alignment between the attracting magnets of the first and second portions of the magnetic drive coupling.

The rotation may be implemented in a gradual manner such that it can cover a range from a point where the magnet arrangements are fully aligned and thus have the strongest attraction to a point where they are fully misaligned resulting in a strongest repulsion. A gradual rotation between these two points enables a partial release.

At least one of the first and second portions may be rotatable by an amount to result in a magnetic repulsion force between the base and the container. Thus, the rotation may even provide a repulsion force.

In one set of examples:
the first magnet arrangement comprises a first set of permanent magnets with alternating polarity around the first set;
the second magnet arrangement comprises a second set of permanent magnets with alternating polarity around the second set; and
when the first and second portions of the magnetic drive coupling are maximally coupled, permanent magnets of opposite polarity face each other.

This provides the two magnet arrangements with a strong stable position for transferring torque across the magnetic coupling.

In this design, in a normal operating mode, the first and second portions of the magnetic drive coupling preferably face each other with opposite polarity permanent magnets aligned, and wherein in a decoupling mode the decoupling arrangement is adapted to rotate the first and second portions relative to each other such that same polarity permanent magnets are aligned or almost aligned.

Thus, the normal operating mode has a maximum attraction and the decoupling mode has a maximum repulsion (but optionally avoiding a stable coupling).

The decoupling arrangement for example comprises a locking arrangement for locking rotation of the one of the first and second portions, such that the other of the first and second portions is rotatable to reduce the magnetic coupling force between the first and second portions of the magnetic drive coupling.

A locking arrangement allows one of the couplings to be rotated while the other is held still. The locking arrangement provides a simple way to prevent the two magnetic coupling portions to simply follow each other's rotation.

With the locking arrangement engaged, one of the magnetic coupling portions can be rotated so that the release of the container from the base is made easier.

The decoupling arrangement for example comprises one or more of:
a motor locking arrangement for locking the rotation of the first portion;
a container locking arrangement for locking the rotation of the container relative to the base;
a drive locking arrangement for locking the rotation of the second portion relative to the container; and
a motor controller for controlling rotation of the first portion, thereby to rotate the first portion relative to the second portion.

Thus, various ways are possible to prevent the first and second portions of the magnetic coupling arrangement from rotating together. If the first portion (in the base) is locked, the second portion can be rotated (e.g. manually) to implement the desired relative rotation. If the second portion is locked to the container (and the container is locked to the base), the motor can be driven to implement the desired relative rotation or the first portion can even be rotated manually. These different locking and drive approaches may be used in different combination, so that for example the first and second portions may even be rotated in opposite directions relative to a fixed reference.

In one example, the decoupling arrangement comprises:
a motor locking arrangement for locking the rotation of the first portion;
a container locking arrangement for locking the rotation of the container relative to the base; and
a manual actuator for rotating the second portion relative to the container.

In this example, the first portion of the magnetic coupling is locked by the motor, and the container is held in a fixed position. The second portion of the magnetic coupling is then rotated by the manual actuator to reduce the strength of the magnetic coupling.

The motor locking arrangement for example comprises a motor driver and the manual actuator comprises a handle or lever. The motor driver for example controls the motor to hold the second portion of the magnetic coupling still.

In another example, the decoupling arrangement comprises:
a motor locking arrangement for locking the rotation of the first portion;
a drive locking arrangement for locking the rotation of the second portion relative to the container; and
a manual actuator for rotating the container relative to the base.

In example, the first portion of the magnetic coupling is locked by the motor, and second portion of the magnetic coupling is fixed relative to the container. The whole container can then be rotated by the manual actuator to reduce the strength of the magnetic coupling.

The motor locking arrangement for example comprises a motor driver and the drive locking arrangement is driven by a handle or lever.

The motor driver for example controls the motor to hold the second portion of the magnetic coupling still.

In another example, the decoupling arrangement comprises:
a container locking arrangement for locking the rotation of the container relative to the base;
a drive locking arrangement for locking the rotation of the second portion relative to the container; and
a motor controller for controlling rotation of the first portion, thereby to rotate the first portion relative to the second portion.

In this example, the second portion of the magnetic coupling is fixed relative to the container and the whole container is also fixed. The motor is used to drive the second portion of the magnetic drive coupling to reduce the strength of the magnetic coupling.

The container for example is attached to a tool holder. The container preferably fits to the base with no rotary mechanical interlocking.

The kitchen appliance may comprise a blender and wherein the tool comprises a blade, or comprising a vessel and wherein the tool comprises a stirrer, or an air fryer and wherein the tool comprises a fan blade.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a kitchen appliance of the type to which the invention may be applied;
Figure 2 shows the magnetic coupling between the base and the tool holder;
Figure 3 shows a perspective view of the magnetic drive coupling;
Figure 4 shows a view from above of one portion of the magnetic drive coupling;
Figures 5 and 6 show a first locking feature in a locked and a released state, respectively;
Figures 7 and 8 show a second locking feature in a locked and a released state, respectively;
Figures 9A to 9C show three possible implementations for a decoupling arrangement;
Figures 10A and 10B show options for implementing the locking arrangement of Figure 9A;
Figure 11 shows an option for implementing the locking arrangement of Figure 9B;
Figure 12 shows an option for implementing the locking arrangement of Figure 9C; and
Figure 13 shows another kitchen appliance to which the invention may be applied.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a kitchen appliance comprises a base having a first portion of a magnetic drive coupling and a container for mounting on the base and having a second portion of the magnetic drive coupling and a tool. A decoupling arrangement is provided for rotating the first and second portions relative to each other such that a magnetic coupling force between the base and the container is reduced for example even to provide a repulsion force. This then enables the container to be removed from the base more easily.

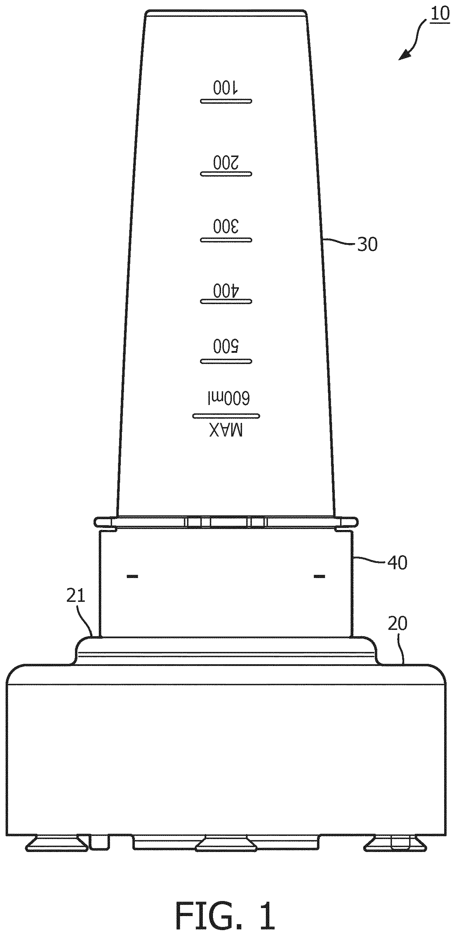

Figure 1 shows a kitchen appliance of the type to which the invention may be applied, in the form of a food processing device. The kitchen appliance 10 comprises a base 20 housing a motor and a container 30. The container for example connects to a tool holder 40. The tool holder 40 fits over a top opening of the container, for example by a screw fit. The tool holder houses a tool, typically a rotary tool such as a blending blade, although reciprocating tools may also be driven.

The container is filled with food items to be blended, and the tool holder is then fitted over the top. Thus, the tool holder functions as a lid of the container. The container is then inverted to mount it over the base, in the orientation shown in Figure 1. In an alternative design, a conventional container is used with a lid on top, and the base is provided with a part of the coupling.

In traditional designs, there is a mechanical interlocking to fit the tool holder 40 to the base 20, such as a bayonet coupling. This coupling provides mechanical connection of the container (and the attached tool holder) to the base as well as providing a rotary coupling.

This invention instead relates to a design in which the rotary coupling is implemented using a magnetic drive coupling. The magnetic drive coupling for example has a first portion in the base 20 and a second portion in the tool holder 40. The magnetic attraction between the two parts provides both a rotary coupling and a mechanical alignment. Thus, there is no need for interlocking mechanical parts.

The base 20 instead has a basically flat upper surface 21 over which the tool holder sits. The first portion of the magnetic drive coupling is beneath the flat upper surface 21 and the second portion is within the tool holder 40. The flat surface may have shape features for interfacing with the tool holder for guiding the tool holder to be positioned accurately so that the magnets are properly aligned. There may also be surface features such as pins etc., where the container can be loaded. However, these features do not create a mechanical rotary coupling.

A bottom side of the tool holder 40 mounts over the base 20 but as mentioned above this may use magnetic attraction only. Thus, the tool holder fits to the base with no mechanical interlocking. There may be a lip or contoured surface to assist with the correct placement and alignment of the tool holder over the base, but the surfaces are basically flat for easy cleaning. Surface friction prevents the container from rotating.

The drive couplings each comprise a magnet arrangement. In one design, each drive coupling portion comprises a ring of magnets with alternating polarity. The north poles of the first portion of the magnetic drive coupling align with the south poles of the second portion of the magnetic drive coupling (and vice versa) when the first and second portions are maximally coupled. In this way, torque can be transferred, but also the tool holder is releasably attached to the base by magnetic forces.

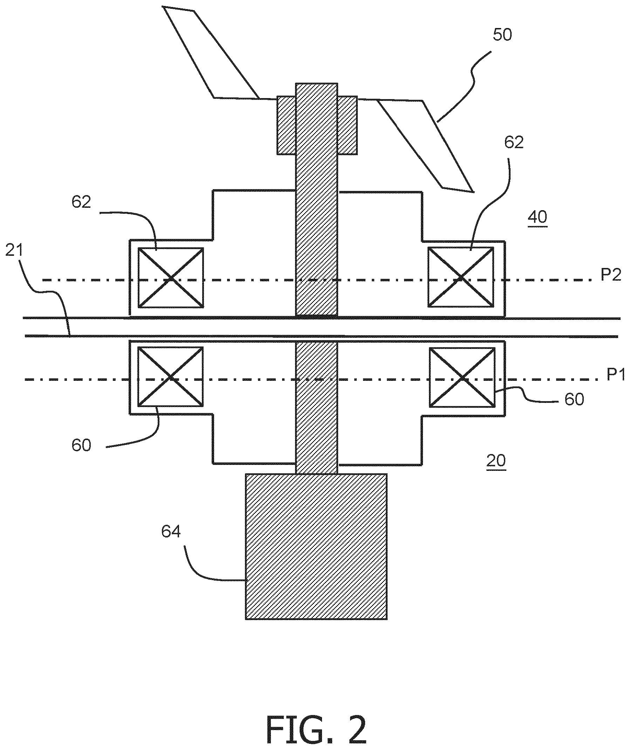

Figure 2 shows the magnetic coupling between the base 20 and the tool holder 40 at the bottom of the container. The base 20 supports the tool, typically a rotary tool 50, at the bottom of the container.

The base 20 houses a motor 64 which drives a first portion 60 of the magnetic drive coupling. This first portion 60 is beneath the upper surface 21 and comprises a first ring of permanent magnets extending in a first plane P1.

The container houses a second portion 62 of the magnetic drive coupling, for magnetically coupling with the first portion 60 of the magnetic drive coupling such that the rotary tool 50 is driven by the motor 64 of the base 20 via the magnetic drive coupling. The second portion 62 comprises a second ring of permanent magnets extending in a second plane P2.

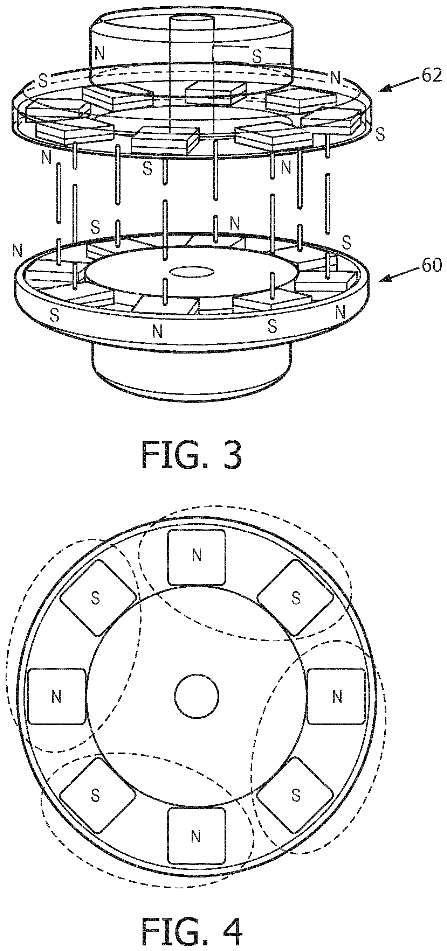

Figure 3 shows a perspective view of the magnetic drive coupling. It shows more clearly that each portion 60, 62 comprises a circular ring of magnets. Facing magnets have opposite polarity and therefore attract. As shown for the second portion 62, each ring of magnets comprises an alternating sequence of opposite polarity magnets. This enables the transfer of greater torque between the portions. However, other arrangement of magnets may be used.

Figure 4 shows one portion of the magnetic drive coupling in plan view. In this example, there are eight permanent magnets (four pairs as shown by dotted lines), four magnets with the north pole N facing outwardly (i.e. facing the opposing portion of the magnetic drive coupling) and four magnets with the south pole S facing outwardly. Thus the N-S axis is vertical.

When the opposite poles are aligned between the two portions, there is a maximum magnetic attraction, which enables the motor torque to be transferred to the tool. If there is a rotation by a small amount (less than the angle between the magnets) the attraction force reduces. When the two portions are perfectly misaligned (i.e. the magnets of one portion are aligned with the spaces in the other), there will be no net force. Further relative rotation can create a repulsive force, which is greatest when the same poles are aligned between the two rings of magnets. If the rotation reaches or exceeds the angle between the magnets, the coupling will adopt a next stable position.

The invention makes use of relative rotation between the first and second magnet arrangements i.e. the two portions of the magnetic drive coupling, to facilitate removal of the container from the base. In particular, a decoupling arrangement is provided for rotating (or enabling rotation of) the first and second portions relative to each other such that a magnetic coupling force between the base and the container is reduced. This rotation is thus used to provide a release or partial release of the coupling force between the two coupling portions.

The release is enabled by reducing the alignment between the attracting magnets of the first and second portions of the magnetic drive coupling to reduce a coupling force, or even to create a magnetic repulsion force between the two portions, and hence between the base and the container.

For example, in a normal operating mode, the first and second portions of the magnetic drive coupling may face each other with opposite polarity permanent magnets aligned. In a decoupling mode, the first and second portions are positioned relative to each other such away from this alignment, for example so that that same polarity permanent magnets are aligned or nearly aligned.

The two portions are normally designed to rotate together, so the decoupling arrangement disconnects this coupling. This requires a holding force (or even a force to produce a counter rotation) which resists the coupling. For example, a locking arrangement is provided for locking rotation of the one of the first and second portions, such that the other of the first and second portions is rotatable to provide the decoupling.

With one portion of the magnetic drive coupling locked, a rotation needs to be applied to the other portion. This may be a manually driven or a motor driven rotation.

To lock the position of the first portion of the magnetic drive coupling (in the base), there may be a manual lock, or else the motor may be driven to a state which holds the first portion in a stationary position. Thus, a motor locking arrangement may be provided for locking the rotation of the first portion.

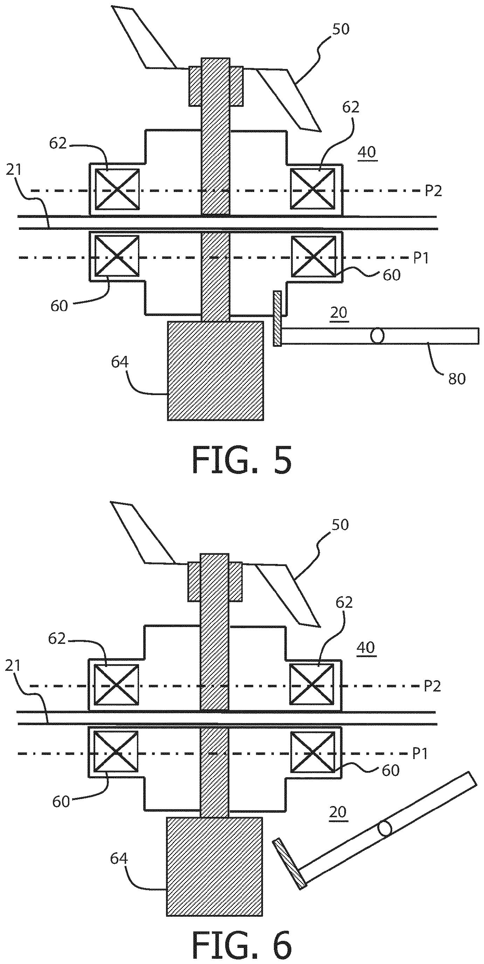

Figures 5 and 6 show a lever 80 for locking the first portion 60 in the base.

Figure 5 shows the lever 80 in a locked state (for the decoupling) and Figure 6 shows the lever in a released state. The lever holds the first portion 60 still relative to the main housing of base, so that if the second portion of the magnetic drive coupling 62 is rotated, it will not entrain rotation of the first portion. The second portion 62 may then be rotated by a manual actuator, or the second portion may be locked relative to the container (e.g. by blocking rotation of the tool) and the container as a whole can be manually rotated.

The lever 80 may extend externally for manual operation by a user. However, it is preferably actuated by the device, for example whenever the motor is shut off by the user. Thus, whenever the device is turned off, the motor rotation may be locked. The lever is only a schematic representation of different ways to lock the motor position.

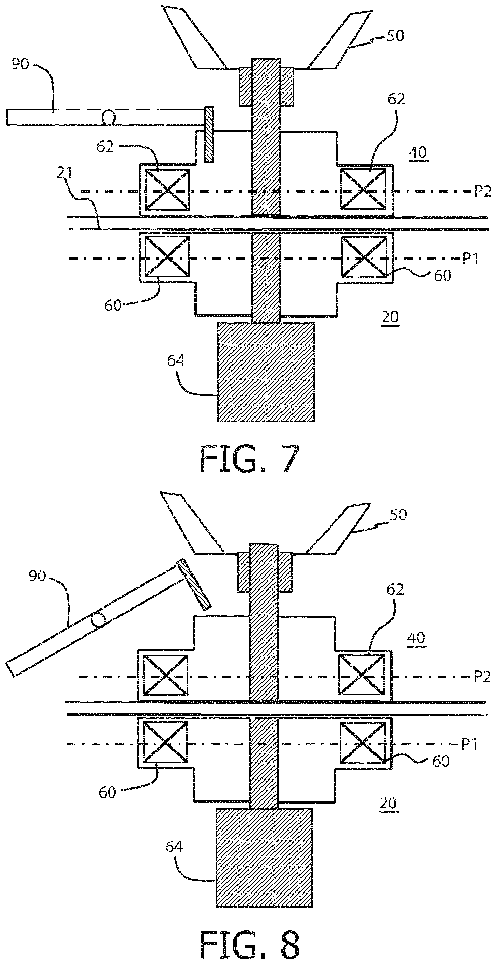

Figures 7 and 8 show a manual lever 90 for locking the second portion 62 in the container. This functions as a drive locking arrangement for locking the rotation of the second portion 62 and hence the tool relative to the container.

Figure 7 shows the lever 90 in a locked state (for the decoupling) and Figure 8 shows the lever in a released state. The lever 90 holds the second portion still relative to the container, so that if the first portion of the magnetic drive coupling 60 is rotated by the motor, it will not entrain rotation of the second portion (as long as the container is prevented from rotating). Thus, a container locking arrangement is then provided for locking the rotation of the container relative to the base.

Thus, by driving the motor to rotate the first portion, a relative rotation is provided between the first and second portions. Thus, in this case, a motor controller for controlling rotation of the first portion may function as part of the decoupling arrangement.

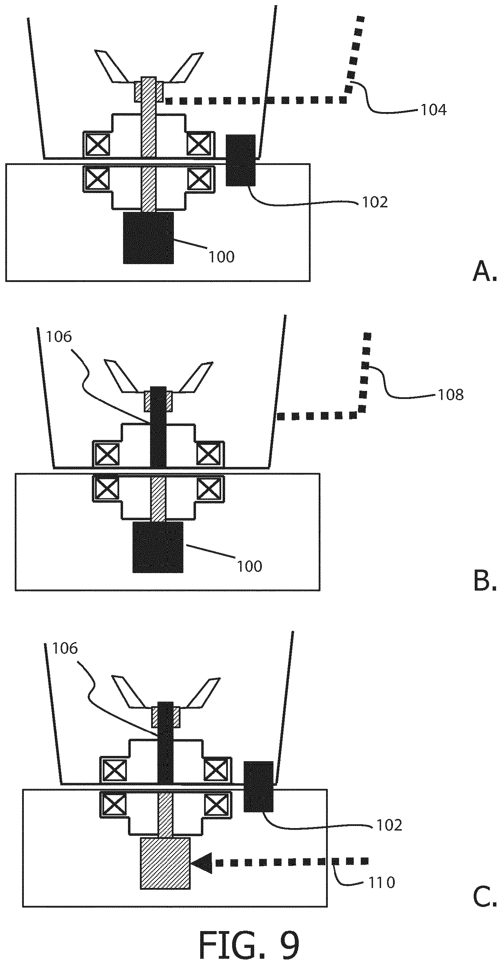

Three possible implementations are shown in more detail in Figure 9.

Figure 9A shows an implementation in which the locking arrangement comprises a motor locking arrangement 100 (e.g. a motor controller or a lever as shown in Figures 5 and 6) for locking the rotation of the first portion 60, and a container locking arrangement 102 for locking the rotation of the container relative to the base.

A manual actuator 104 is then provided for rotating the second portion (and hence the tool) relative to the container.

The manual actuator 104 engages with the second portion 62 of the magnetic drive coupling. In the normal operating mode, the manual actuator 104 does not grip the second portion 62. When the user wishes to decouple the coupling, the actuator 104 is operated to grip the second portion 62, and movement of the actuator 104 is used to rotate the second portion 62.

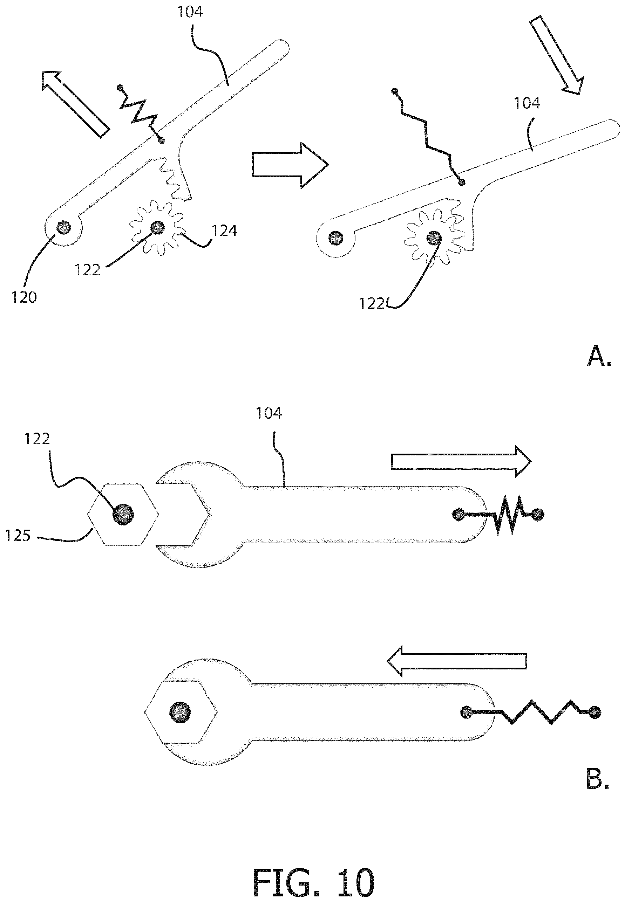

Figure 10 shows two possible implementations. In the first design of Figure 10A, the manual actuator 104 comprises a lever which rotates about an axis 120 parallel to a rotation axis 122 of the second portion 62. When the lever is rotated, a line of teeth first engage with a cog 124 and then rotate it to rotate the second portion of the drive coupling. Operating the manual actuator 104 thus engages and then rotates the second portion of the drive coupling.

In the second design of Figure 10B, the manual actuator 104 comprises a push and twist lever. It is pushed to engage a nut 125 which rotates the second portion 62 about its rotation axis 122. After engagement with the nut 125, the manual actuator is rotated to de-align the magnetic coupling.

The container locking arrangement may simply be the friction between the container and the base, if it is sufficient to overcome the torque needed to rotate the tool and the coupled second portion of the magnetic drive coupling within the container. However, a mechanical locking of the container to the base may also be provided in addition to a frictional engagement. This may also serve to prevent the motor being driven when the container is not correctly positioned on the base by using a sensing switch.

The first portion of the magnetic coupling is thus locked by the motor, and the container is held in a fixed position. The second portion of the magnetic coupling is then rotated by a manual actuator to reduce the strength of the magnetic coupling.

Figure 9B shows an implementation in which the locking arrangement comprises a motor locking arrangement 100 (e.g. a motor controller or lever) for locking the rotation of the first portion, and a drive locking arrangement 106 for locking the rotation of the second portion (i.e. the tool) relative to the container for example as shown in Figures 7 and 8.

A manual actuator 108 is provided for rotating the container relative to the base.

The first portion of the magnetic coupling is locked by the motor, and the second portion of the magnetic coupling is fixed relative to the container. The whole container can then be rotated by the manual actuator to reduce the strength of the magnetic coupling. This manual actuator 108 may then simply be the handle of the container, so that a simple twist motion is used to decouple the container from the base before removing the container.

In this case, a lower friction is desired between the container and the base to allow for rotation of the container on the base.

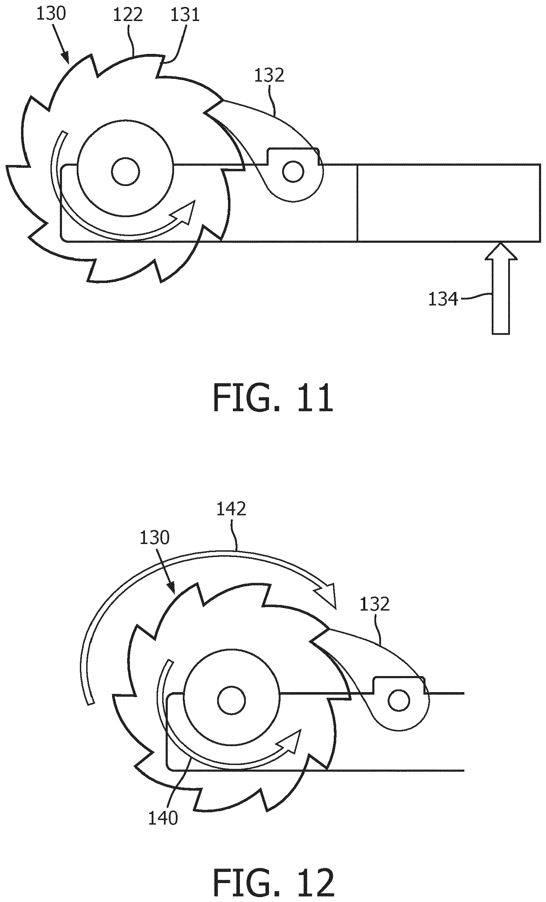

Figure 11 shows one possible arrangement. The drive locking arrangement comprises a freewheel 130 which only rotates in one direction, for example by virtue of a ratchet 131 and pawl 132. Any suitable arrangement may be used to ensure a single rotation direction. When the user wishes to decouple the coupling, the whole container is rotated as represented by arrow 134, including the magnetic coupling. The rotation is in the same direction as the rotation direction of the magnetic coupling. The ratchet and pawl thus perform the function of the drive locking arrangement 106 in that the tool is forced to rotate with the container and cannot remain statically positioned over the first portion of the magnetic drive coupling.

Figure 9C shows an implementation in which the locking arrangement comprises the container locking arrangement 102 as described above for locking the rotation of the container relative to the base and the drive locking arrangement 106 for locking the rotation of the second portion relative to the container. A motor controller is used for controlling rotation of the first portion, thereby to rotate the first portion relative to the second portion. This is represented by the motor drive signal 110.

The second portion of the magnetic coupling is fixed relative to the container and the whole container is also fixed. The motor is used to drive the first potion of the magnetic drive coupling to reduce the strength of the magnetic coupling.

This motor drive only needs to make an adjustment of a few degrees (corresponding to the angular pitch between the magnets).

The approach may also use a ratchet and pawl (or equivalent) design as shown in Figure 12, again so that the second portion of the magnetic drive coupling is only rotatable in one direction. In such a case, for motor rotation in an opposite direction, the drive locking arrangement 106 for locking the rotation of the second portion relative to the container is implemented by this single direction rotation of the tool.

As shown in Figure 12, the motor implements the decoupling by rotating in the opposite direction to the freewheel 130. The freewheel rotation is shown by arrow 140 and the motor drive is shown by arrow 142. Thus, the implementation of Figure 9C does not need any user operations. If the container is fixed to the base as part of the container fitting process, or there is sufficient friction between the base and the container, the motor control alone can implement the decoupling when the device is turned off.

The rotation to providing dis-alignment should stop mechanically before the dis-alignment is 100%. This prevents a further relative rotation to a new stable position again with large magnetic coupling.

Combinations of the approaches outlined above are possible when implementing rotations of the two portions in opposite directions.

The examples above show a container with a separate tool holder. However, the invention may equally be applied to a container with a fixed bottom at which the tool is mounted.

The examples above relate to a food processing kitchen appliance, wherein the tool is typically used to process food before cooking and the container is a vessel for food processing. The food processing may also take place during cooking when the appliance is also for cooking e.g. for stirring during the cooking process. In such a case, the container may be a vessel for both food processing and cooking.

The invention as described through the various examples may also be applied to an appliance only for food cooking, and the tool is for example for controlling the cooking environment rather than processing the food. The container is then a cooking chamber and the tool is for example for controlling an air flow.

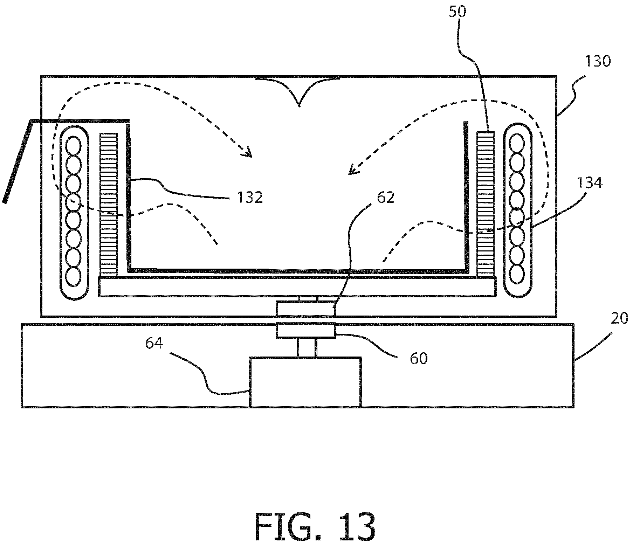

Figure 13 shows an example of an air fryer, having a base 20 housing a motor 64 and a container in the form of a food cooking chamber 130 in which there is a tool 50 in the form of a fan blade for circulating heated air around the cooking chamber. The first and second portions 60,62 of the magnetic drive coupling are shown. The base 20 houses the motor 64 which drives the first portion 60 of the magnetic drive coupling. The container houses the second portion 62 of the magnetic drive coupling, for magnetically coupling with the first portion 60 of the magnetic drive coupling such that the tool 50 is driven by the motor 64 of the base 20 via the magnetic drive coupling. The food is held in a basket 132, and the fan blade circulates air around the food and through the basket, which has at least perforated side walls. A handle is attached either to the container/ food cooking chamber 130 or to the basket 132 so that the container can be removed from the base by the user.

In one example, the cooking chamber has a heater 134, and the coupling between the base 20 and the cooking chamber 130 also provides an electrical power coupling to the heater 134. This electrical power coupling is for example wireless by inductive power transfer.

The magnetic coupling between the base and the container in this case enables driving of the fan blade. It means the container part (the cooking chamber) of the air fryer does not need to be separately plugged in, and the motor for driving the fan is in the base 20.

In another example of air fryer, the heater is in the base 20. In this case, heat may be transferred to the cooking chamber by inductive heating. In this case, no electrical power transfer is needed between the base and the container.

The base 20 may for example be one hob of the cooking surface of a cooker, so that different appliances may be applied to the hob. For example, the same design of base 20 and its magnetic coupling 60 may be used to drive a food processing appliance such as a blender or a food cooking device such as an air fryer. A cooking appliance wireless power transfer is for example disclosed in WO 2018/024913.

The invention thus may be applied to any kitchen appliance having a rotary tool driven by a magnetic coupling from a motor in a separate base. The tool may be for beating, whisking, blending, stirring, mixing, airflow control etc.

In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A kitchen appliance (10) comprising:
a base (20) housing a motor (64), the base having an upper surface (21) and a first portion (60) of a magnetic drive coupling beneath the upper surface, wherein the first portion comprises a first magnet arrangement;
a container, wherein a bottom side of the container is for mounting on the base (20), wherein the container houses:
a tool (50); and
a second portion (62) of the magnetic drive coupling for magnetically coupling with the first portion (60) of the magnetic drive coupling, such that the tool (50) is driven by the motor (64) of the base via the magnetic drive coupling, wherein the second portion comprises a second magnet arrangement; the kitchen appliance (10) being **characterized by**:
a decoupling arrangement (100,102,104,106,108,110) for rotating the first and second portions relative to each other such that a magnetic coupling force between the first and second portions of the magnetic drive coupling is reduced.

2. The kitchen appliance of claim 1, wherein at least one of the first and second portions (60,62) is rotatable by an amount to reduce the magnetic coupling force between the first and second portions of the magnetic drive coupling.

3. The kitchen appliance of claim 2, wherein at least one of the first and second portions (60,62) is rotatable by an amount to result in a magnetic repulsion force between the first and second portions of the magnetic drive coupling.

4. The kitchen appliance of any one of claims 1 to 3, wherein:
the first magnet arrangement comprises a first set of permanent magnets with alternating polarity around the first set;
the second magnet arrangement comprises a second set of permanent magnets with alternating polarity around the second set; and
when the first and second portions of the magnetic drive coupling are maximally coupled, permanent magnets of opposite polarity face each other.

5. The kitchen appliance of claim 4, wherein in a normal operating mode, the first and second portions (60,62) of the magnetic drive coupling face each other with opposite polarity permanent magnets aligned, and wherein in a decoupling mode the decoupling arrangement is adapted to rotate the first and second portions relative to each other such that same polarity permanent magnets are aligned or almost aligned.

6. The kitchen appliance of any one of claims 1 to 5, wherein the decoupling arrangement comprises a locking arrangement (100,102,106) for locking rotation of the one of the first and second portions, such that the other of the first and second portions is rotatable to reduce the magnetic coupling force between the first and second portions of the magnetic drive coupling.

7. The kitchen appliance of any one of claims 1 to 6, wherein the decoupling arrangement comprises one or more of:
a motor locking (100) arrangement for locking the rotation of the first portion;
a container locking arrangement (102) for locking the rotation of the container relative to the base;
a drive locking arrangement (106) for locking the rotation of the second portion relative to the container; and
a motor controller (110) for controlling rotation of the first portion, thereby to rotate the first portion relative to the second portion.

8. The kitchen appliance of any one of claim 1 to 7, wherein the decoupling arrangement comprises:
a motor locking arrangement (100) for locking the rotation of the first portion;
a container locking arrangement (102) for locking the rotation of the container relative to the base; and
a manual actuator (104) for rotating the second portion relative to the container.

9. The kitchen appliance of claim 8, wherein the motor locking arrangement comprises a motor driver and the manual actuator comprises a handle or lever.

10. The kitchen appliance of any one of claim 1 to 7, wherein the decoupling arrangement comprises:
a motor locking arrangement (100) for locking the rotation of the first portion;
a drive locking arrangement (106) for locking the rotation of the second portion relative to the container; and
a manual actuator (108) for rotating the container relative to the base.

11. The kitchen appliance of claim 10, wherein the motor locking arrangement comprises a motor driver and the drive locking arrangement is driven by a handle or lever.

12. The kitchen appliance of any one of claims 1 to 7, wherein the decoupling arrangement comprises:
a container locking arrangement (102) for locking the rotation of the container relative to the base;
a drive locking arrangement (106) for locking the rotation of the second portion relative to the container; and
a motor controller (110) for controlling rotation of the first portion, thereby to rotate the first portion relative to the second portion.

13. The kitchen appliance of any one of claims 1 to 12, further comprising a tool holder (40) connected to the container.

14. The kitchen appliance of any one of claims 1 to 13, wherein the container (40) fits to the base (20) with no rotary mechanical interlocking.

15. The kitchen appliance of any one of claims 1 to 14, comprising a blender and wherein the tool comprises a blade, or comprising a vessel and wherein the tool comprises a stirrer, or an air fryer and wherein the tool comprises a fan blade.

## Patentansprüche

1. Küchengerät (10), umfassend:
eine Basis (20), die einen Motor (64) beherbergt, wobei die Basis eine obere Oberfläche (21) und einen ersten Abschnitt (60) einer Magnetantriebskopplung unter der oberen Oberfläche aufweist, wobei der erste Abschnitt eine erste Magnetanordnung umfasst;
einen Behälter, wobei eine Unterseite des Behälters zur Montage auf der Basis (20) dient, wobei der Behälter beherbergt:
ein Werkzeug (50); und
einen zweiten Abschnitt (62) der Magnetantriebskopplung zum magnetischen Koppeln mit dem ersten Abschnitt (60) der Magnetantriebskopplung, so dass das Werkzeug (50) von dem Motor (64) der Basis über die Magnetantriebskopplung angetrieben wird, wobei der zweite Abschnitt eine zweite Magnetanordnung umfasst; wobei das Küchengerät (10) **gekennzeichnet ist durch**:
eine Entkopplungsanordnung (100,102,104,106,108,110) zum Drehen des ersten und des zweiten Abschnitts in Bezug zueinander, sodass eine magnetische Kopplungskraft zwischen dem ersten und dem zweiten Abschnitt der Magnetantriebskopplung verringert wird.

2. Küchengerät nach Anspruch 1, wobei mindestens einer von dem ersten und zweiten Abschnitt (60,62) um einen Betrag drehbar ist, um die magnetische Kopplungskraft zwischen dem ersten und zweiten Abschnitt der Magnetantriebskopplung zu verringern.

3. Küchengerät nach Anspruch 2, wobei mindestens einer von dem ersten und zweiten Abschnitt (60,62) um einen Betrag drehbar ist, um zu einer magnetischen Abstoßungskraft zwischen dem ersten und zweiten Abschnitt der Magnetantriebskopplung zu führen.

4. Küchengerät nach einem der Ansprüche 1 bis 3, wobei:
die erste Magnetanordnung einen ersten Satz Permanentmagnete mit abwechselnder Polarität um den ersten Satz umfasst;
die zweite Magnetanordnung einen zweiten Satz Permanentmagnete mit abwechselnder Polarität um den zweiten Satz umfasst; und
wenn der erste und zweite Abschnitt der Magnetantriebskopplung maximal gekoppelt sind, Permanentmagnete entgegengesetzter Polarität einander zugewandt sind.

5. Küchengerät nach Anspruch 4, wobei in einem Normalbetriebsmodus der erste und zweite Abschnitt (60,62) der Magnetantriebskopplung einander zugewandt sind, wobei Permanentmagnete mit entgegengesetzter Polarität ausgerichtet sind, und wobei die Entkopplungsanordnung in einem Entkopplungsmodus angepasst ist, den ersten und den zweiten Abschnitt in Bezug zueinander zu drehen, sodass Permanentmagnete mit gleicher Polarität ausgerichtet oder nahezu ausgerichtet sind.

6. Küchengerät nach einem der Ansprüche 1 bis 5, wobei die Entkopplungsanordnung eine Verriegelungsanordnung (100,102,106) zum Verriegeln von Drehung des einen von dem ersten und zweiten Abschnitt umfasst, sodass der andere von dem ersten und zweiten Abschnitt drehbar ist, um die magnetische Kopplungskraft zwischen dem ersten und zweiten Abschnitt der Magnetantriebskopplung zu verringern.

7. Küchengerät nach einem der Ansprüche 1 bis 6, wobei die Entkopplungsanordnung eines oder mehrere umfasst von:
eine Anordnung zur Motorverriegelung (100) zum Verriegeln der Drehung des ersten Abschnitts;
eine Behälterverriegelungsanordnung (102) zum Verriegeln der Drehung des Behälters in Bezug zur Basis;
eine Antriebsverriegelungsanordnung (106) zum Verriegeln der Drehung des zweiten Abschnitts in Bezug zum Behälter; und
eine Motorsteuereinheit (110) zum Steuern der Drehung des ersten Abschnitts, um dadurch den ersten Abschnitt in Bezug zum zweiten Abschnitt zu drehen.

8. Küchengerät nach einem von Anspruch 1 bis 7, wobei die Entkopplungsanordnung umfasst:
eine Motorverriegelungsanordnung (100) zum Verriegeln der Drehung des ersten Abschnitts;
eine Behälterverriegelungsanordnung (102) zum Verriegeln der Drehung des Behälters in Bezug zur Basis; und
eine manuelle Betätigungsvorrichtung (104) zum Drehen des zweiten Abschnitts in Bezug zum Behälter.

9. Küchengerät nach Anspruch 8, wobei die Motorverriegelungsanordnung einen Motorantrieb umfasst und die manuelle Betätigungsvorrichtung einen Griff oder Hebel umfasst.

10. Küchengerät nach einem von Anspruch 1 bis 7, wobei die Entkopplungsanordnung umfasst:
eine Motorverriegelungsanordnung (100) zum Verriegeln der Drehung des ersten Abschnitts;
eine Antriebsverriegelungsanordnung (106) zum Verriegeln der Drehung des zweiten Abschnitts in Bezug zum Behälter; und
eine manuelle Betätigungsvorrichtung (108) zum Drehen des Behälters in Bezug zur Basis.

11. Küchengerät nach Anspruch 10, wobei die Motorverriegelungsanordnung einen Motorantrieb umfasst und die Antriebsverriegelungsanordnung über einen Griff oder Hebel angetrieben wird.

12. Küchengerät nach einem der Ansprüche 1 bis 7, wobei die Entkopplungsanordnung umfasst:
eine Behälterverriegelungsanordnung (102) zum Verriegeln der Drehung des Behälters in Bezug zur Basis;
eine Antriebsverriegelungsanordnung (106) zum Verriegeln der Drehung des zweiten Abschnitts in Bezug zum Behälter; und
eine Motorsteuereinheit (110) zum Steuern der Drehung des ersten Abschnitts, um dadurch den ersten Abschnitt in Bezug zum zweiten Abschnitt zu drehen.

13. Küchengerät nach einem der Ansprüche 1 bis 12, das weiter einen Werkzeughalter (40) umfasst, der mit dem Behälter verbunden ist.

14. Küchengerät nach einem der Ansprüche 1 bis 13, wobei der Behälter (40) ohne mechanische Drehverriegelung mit der Basis (20) zusammenpasst.

15. Küchengerät nach einem der Ansprüche 1 bis 14, das einen Mixer umfasst, und wobei das Werkzeug eine Klinge umfasst, oder ein Gefäß umfasst, und wobei das Werkzeug einen Rührer umfasst, oder eine Heißluftfritteuse, und wobei das Werkzeug einen Lüfterflügel umfasst.

## Revendications

1. Appareil de cuisine (10) comprenant :
une base (20) logeant un moteur (64), la base présentant une surface supérieure (21) et une première partie (60) d'un couplage à entraînement magnétique sous la surface supérieure, dans lequel la première partie comprend un premier agencement d'aimants ;
un récipient, dans lequel un côté inférieur du récipient est destiné à être monté sur la base (20), dans lequel le récipient loge :
un ustensile (50) ; et
une seconde partie (62) du couplage à entraînement magnétique permettant un couplage magnétique avec la première partie (60) du couplage à entraînement magnétique, de sorte que l'ustensile (50) soit entraîné par le moteur (64) de la base via le couplage à entraînement magnétique, dans lequel la seconde partie comprend un second agencement d'aimants ; l'appareil de cuisine (10) étant **caractérisé par** :
un agencement de découplage (100, 102, 104, 106, 108, 110) permettant de faire tourner les première et seconde parties l'une par rapport à l'autre de telle sorte qu'une force de couplage magnétique entre les première et seconde parties du couplage à entraînement magnétique soit réduite.

2. Appareil de cuisine selon la revendication 1, dans lequel au moins l'une des première et seconde parties (60, 62) peut tourner d'une quantité permettant de réduire la force de couplage magnétique entre les première et seconde parties du couplage à entraînement magnétique.

3. Appareil de cuisine selon la revendication 2, dans lequel au moins l'une des première et seconde parties (60, 62) peut tourner d'une quantité permettant de générer une force de répulsion magnétique entre les première et seconde parties du couplage à entraînement magnétique.

4. Appareil de cuisine selon l'une quelconque des revendications 1 à 3, dans lequel :
le premier agencement d'aimants comprend un premier ensemble d'aimants permanents à polarité alternée autour du premier ensemble ;
le second agencement d'aimants comprend un second ensemble d'aimants permanents à polarité alternée autour du second ensemble ; et
lorsque les première et seconde parties du couplage à entraînement magnétique sont couplées au maximum, des aimants permanents de polarité opposée se font face.

5. Appareil de cuisine selon la revendication 4, dans lequel, dans un mode de fonctionnement normal, les première et seconde parties (60, 62) du couplage à entraînement magnétique se font face avec des aimants permanents de polarité opposée alignés, et dans lequel, dans un mode de découplage, l'agencement de découplage est conçu pour faire tourner les première et seconde parties l'une par rapport à l'autre de telle sorte que les aimants permanents de même polarité soient alignés ou presque alignés.

6. Appareil de cuisine selon l'une quelconque des revendications 1 à 5, dans lequel l'agencement de découplage comprend un agencement de verrouillage (100, 102, 106) pour verrouiller la rotation de l'une des première et seconde parties, de telle sorte que l'autre des première et seconde parties puisse tourner pour réduire la force de couplage magnétique entre les première et seconde parties du couplage à entraînement magnétique.

7. Appareil de cuisine selon l'une quelconque des revendications 1 à 6, dans lequel l'agencement de découplage comprend un ou plusieurs des éléments suivants :
un agencement de verrouillage de moteur (100) pour verrouiller la rotation de la première partie ;
un agencement de verrouillage de récipient (102) pour verrouiller la rotation du récipient par rapport à la base ;
un agencement de verrouillage d'entraînement (106) pour verrouiller la rotation de la seconde partie par rapport au récipient ; et
un dispositif de commande de moteur (110) pour commander la rotation de la première partie, permettant ainsi de faire tourner la première partie par rapport à la seconde partie.

8. Appareil de cuisine selon l'une quelconque des revendications 1 à 7, dans lequel l'agencement de découplage comprend :
un agencement de verrouillage de moteur (100) pour verrouiller la rotation de la première partie ;
un agencement de verrouillage de récipient (102) pour verrouiller la rotation du récipient par rapport à la base ; et
un actionneur manuel (104) permettant de faire tourner la seconde partie par rapport au récipient.

9. Appareil de cuisine selon la revendication 8, dans lequel l'agencement de verrouillage de moteur comprend un module de commande de moteur et l'actionneur manuel comprend une poignée ou un levier.

10. Appareil de cuisine selon l'une quelconque des revendications 1 à 7, dans lequel l'agencement de découplage comprend :
un agencement de verrouillage de moteur (100) pour verrouiller la rotation de la première partie ;
un agencement de verrouillage d'entraînement (106) pour verrouiller la rotation de la seconde partie par rapport au récipient ; et
un actionneur manuel (108) permettant de faire tourner le récipient par rapport à la base.

11. Appareil de cuisine selon la revendication 10, dans lequel l'agencement de verrouillage de moteur comprend un module de commande de moteur et l'agencement de verrouillage d'entraînement est entraîné par une poignée ou un levier.

12. Appareil de cuisine selon l'une quelconque des revendications 1 à 7, dans lequel l'agencement de découplage comprend :
un agencement de verrouillage de récipient (102) pour verrouiller la rotation du récipient par rapport à la base ;
un agencement de verrouillage d'entraînement (106) pour verrouiller la rotation de la seconde partie par rapport au récipient ; et
un dispositif de commande de moteur (110) pour commander la rotation de la première partie, permettant ainsi de faire tourner la première partie par rapport à la seconde partie.

13. Appareil de cuisine selon l'une quelconque des revendications 1 à 12, comprenant en outre un support d'ustensile (40) relié au récipient.

14. Appareil de cuisine selon l'une quelconque des revendications 1 à 13, dans lequel le récipient (40) s'emboîte sur la base (20) sans verrouillage mécanique rotatif.

15. Appareil de cuisine selon l'une quelconque des revendications 1 à 14, comprenant un mixeur et dans lequel l'ustensile comprend une lame, ou comprenant une cuve et dans lequel l'ustensile comprend un agitateur, ou une friteuse à air chaud et dans lequel l'ustensile comprend une pale de ventilateur.
